# EUROPÄISCHE PATENTSCHRIFT

(11) **EP 2 598 847 B1**
(45) Veröffentlichungstag und Bekanntmachung des Hinweises auf die Patenterteilung: **01.04.2020**
(21) Anmeldenummer: 11728844.9
(22) Anmeldetag: 01.07.2011
(51) Int. Cl.: G01F 15/18, G01D 11/30, G01K 1/14

(54) **WECHSELARMATUR UND SYSTEM ZUM EINFÜHREN EINER MESSSONDE IN EINEN BEHÄLTER**
RETRACTABLE FITTING AND SYSTEM FOR INSERTING A MEASURING PROBE INTO A CONTAINER
MONTURE RÉTRACTIBLE ET SYSTÈME D'INSERTION D'UNE SONDE DE MESURE DANS UN RÉCIPIENT

(30) Priorität: 28.07.2010 DE 102010038540
(43) Veröffentlichungstag der Anmeldung: 05.06.2013
(73) Patentinhaber: Endress+Hauser Flowtec AG, 4153 Reinach (CH)
(72) Erfinder: KAMBER, Walter, CH-4457 Dietgen (CH); SCHNEIDER, Lukas, CH-4492 Tecknau (CH)
(74) Vertreter: Andres, Angelika Maria
(86) Internationale Anmeldenummer: PCT/EP2011/061091
(87) Internationale Veröffentlichungsnummer: WO 2012/013445

(56) Entgegenhaltungen:
- DE-A1- 10 054 272
- US-A- 5 174 325
- US-B1- 6 182 521

## Beschreibung

Die vorliegende Erfindung betrifft eine Wechselarmatur zum Einführen eines Einsteckgeräts in einen Behälter durch eine Behälteröffnung.

Aus dem Stand der Technik sind Wechselarmaturen bekannt, welche das Einführen von Einsteckgeräten in einen, insbesondere unter Druck stehenden, Behälter ermöglichen. Viele sind meist sehr aufwendig konstruiert und damit teuer. Andere induzieren während ihrer Verwendung hohe mechanische Spannungen in den Einsteckgeräten.

US 6 182 521 B1 offenbart eine Vorrichtung zur Positionierung einer Messsonde relativ zu einer Sondenachse. Die Positioniereinrichtung besteht aus einer linearen Verstelleinheit zum Verstellen des Sondenkopfes entlang der Sondenachse und einer Rotationsverstelleinheit zum Drehen des Sondenkopfes um die Sondenachse. Beide Verstelleinheiten sind koaxial zur Vorrichtungsachse, die mit der Sondenachse übereinstimmt, innerhalb eines hohlzylindrischen Gehäuses angeordnet.

US 5 174 325 A1 offenbart einen Mechanismus, der ein einfaches Entfernen eines Sensors aus einem druckbeaufschlagten Prozessfluidbehälter durch ein Ventil, das an einer Öffnung im Behälter befestigt ist, ermöglicht. Der Mechanismus beinhaltet ein klappbares Stützgestänge mit einem ersten Ende und einem zweiten Ende, die aus mindestens zwei Gliedern gebildet sind, die miteinander verbunden sind, und ein dazwischen angeordnetes Drehgelenk.

DE 100 54 272 A1 offenbart eine austauschbare Armatur, umfassend ein Gehäuse, eine abnehmbare Messsonde, die sich axial in dem Gehäuse bewegt und in einen Behälter eingeführt werden kann, und eine Führungseinheit, die sich axial in dem Gehäuse bewegt und die Sonde zwischen einer Messposition und einer Bereitschaftsposition hält und führt.

Die Aufgabe der Erfindung besteht darin, eine Wechselarmatur für ein Einsteckgerät vorzuschlagen, welche ein möglichst spannungsfreies Einführen des Einsteckgeräts in einen unter Druck stehenden Behälter gewährleistet.

Die Aufgabe wird gelöst durch den Gegenstand des unabhängigen Anspruchs 1 und durch den Gegenstand des Anspruchs 6. Weiterbildungen und Ausgestaltungen der Erfindung finden sich in den Merkmalen der jeweils abhängigen Ansprüche wieder. Eine erfindungsgemäße Wechselarmatur zum Einführen eines Einsteckgeräts in einen Behälter oder in ein Rohr durch eine Öffnung im Behälter oder durch eine Öffnung im Rohr, umfasst eine Linearführung, welche über einen Halter am Behälter lösbar anbringbar ist, einen entlang der Linearführung geführten Schlitten und einen Gelenkkopf, welcher auf dem Schlitten so gelagert ist, dass er zumindest zwei translatorische Freiheitsgrade senkrecht zur Linearführung aufweist, entlang derer er beweglich ist. Der Gelenkkopf ist so ausgestaltet, dass das Einsteckgerät in dem Gelenkkopf zumindest axial geführt ist, insbesondere weist der Gelenkkopf eine Durchführung auf, durch welche das Einsteckgerät durchführbar ist, beispielsweise eine durchgehende Bohrung. Eine Lagerung des Gelenkkopfs auf dem Schlitten mit einem oder zwei zusätzlichen rotatorischen Freiheitsgraden um einen oder beide translatorischen Freiheitsgrade kann darüber hinaus vorgesehen sein.

Auf dem Schlitten ist eine Gabel befestigt, welche Gabel eine Hochachse aufweist und an welcher Gabel ein Stift senkrecht zur Linearführung und senkrecht zur Hochachse der Gabel angeordnet ist, welcher Stift in einer abgesetzten Nut des Gelenkkopfs gelagert ist und die Bewegung des Gelenkkopfs längs der Nut begrenzt, wobei die Gabel die Bewegung des Gelenkkopfs längs des Stifts begrenzt, wobei der erste translatorische Bewegungsspielraum parallel zur Hochachse ist.

Die Erfindung lässt zahlreiche Ausführungsformen zu. Einige davon sollen hier kurz anhand der nachfolgenden Figuren näher erläutert werden. Gleiche Elemente sind in den Figuren mit gleichen Bezugszeichen versehen.
- Fig. 1: zeigt perspektivisch eine erfindungsgemäße Wechselarmatur,
- Fig. 2: zeigt perspektivisch den Schlitten mit Gabel und Gelenkkopf der erfindungsgemäßen Wechselarmatur aus Fig. 1.

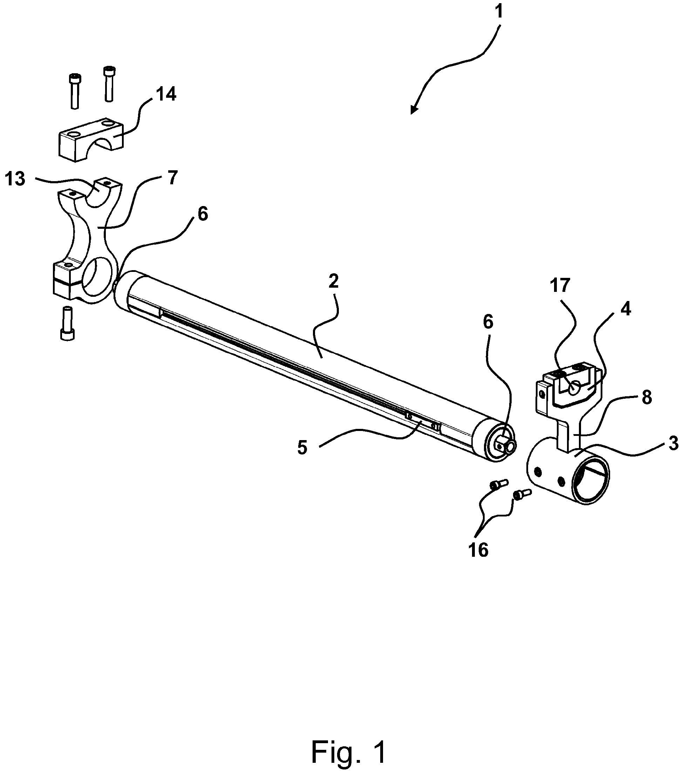

In Fig. 1 ist eine erfindungsgemäße Wechselarmatur 1 in einer Explosionsdarstellung veranschaulicht. Diese zeigt die Wechselarmatur 1 in einem nicht montierten Zustand. Die Wechselarmatur weist eine Linearführung 1 auf, welche z.B. über den Halter 7 an einem hier nicht dargestellten Behälter, welcher insbesondere mit einem gasförmigen Medium befüllt ist, welches seinerseits einen Druck größer 1 bar aufweist, lösbar anbringbar ist. Der Behälter, beispielsweise ein Kessel oder eine Rohrleitung, weist dazu beispielsweise einen Stutzen auf. Der Stutzen ist dabei beispielsweise auf den Behälter oder auf die Rohrleitung aufgesetzt, insbesondere ist der Stutzen mit dem Behälter oder dem entsprechenden Rohr der Rohrleitung stoffschlüssig verbunden, z.B. verschweißt, um eine Öffnung im Behälter oder der Rohrleitung herum, in welche Öffnung das Einsteckgerät mit Hilfe der Wechselarmatur 1 eingeführt werden soll.

Weiterhin weist die Linearführung 2 einen Schlitten 3 auf, welcher hier auf die gezeigte Linearführung 2 aufgeschoben wird und dadurch axial entlang der Linearführung 2 durch diese geführt ist. Der Schlitten 3 wird über die Verbindungsschrauben 16 mit der Gewindemutter 5 verbunden. Die Gewindemutter 5 ist in einer abgesetzten Nut in der Linearführung als Schiene geführt und steht mit einer Spindel, z.B. einer Trapezgewindespindel, welche nicht zu sehen in der Linearführung 2 um ihre eigene Längsachse drehbar gelagert ist, im Eingriff. Dadurch bilden sie ein Getriebe, auch Hubgetriebe genannt, welches eine Drehbewegung der Spindel in eine Längsbewegung der Mutter, respektive des Schlittens 3, entlang der Linearführung 2 umwandelt. Die Spindel ist in der Linearführung zu diesem Zweck radial geführt. Die Lagerung der Spindel nimmt insbesondere die Kräfte in axiale Richtung auf. Neben der Spindel sind weitere Varianten zum Aufbringen einer Kraft in Richtung der Linearführung 2 auf den Schlitten 3 dem Fachmann bekannt, z.B. über eine Pneumatik oder Hydraulik oder weitere mechanische Vorschub-Übertragungselemente. Bei der hier gezeigten Wechselarmatur 1 weist die Spindel zwei Stirnseiten auf, welche jeweils eine Kupplung zur Übertragung eines Drehmoments um die Längsachse der Spindel auf die Spindel aufweist. Die Kupplungen sind hier als Sechskant 6 ausgestaltet. Somit kann ein einfacher Gabeschlüssel oder ein entsprechend ausgestaltetes Handrad zur Übertragung des Drehmoments auf die Spindel genutzt werden.

Auf dem Schlitten 3 ist ein Gelenkkopf 4 gelagert. Hier in einer Gabel 8. Der Gelenkkopf 4 ist dabei so gelagert, dass er zumindest zwei transversale Freiheitsgrade senkrecht zur Linearführung aufweist, entlang derer er beweglich ist. Er ist in diesen zwei Richtungen senkrecht zur Linearführung verschiebbar gelagert, um Ausgleichsbewegungen durchzuführen und somit das Einsteckgerät möglichst spannungsfrei oder zumindest spannungsarm in die Behälteröffnung einzuführen. Wird eine Kraft auf den Gelenkkopf 4 in eine oder beide der zwei Richtungen senkrecht zur Linearführung ausgeübt, führt dieser eine Ausgleichsbewegung in Richtung der Kraft aus. Der Kraft entgegen steht nur eine sehr geringe Kraft, beispielsweise hervorgerufen durch Reibung.

In diesem Beispiel ist der Gelenkkopf zweigeteilt. Er umfasst eine erste Spannbacke 10 und eine zweite Spannbacke 11. Diese beiden Bauteile bilden eine Öffnung 17 für das Einsteckgerät. Das Einsteckgerät, insbesondere der Prozess-Messtechnik, insbesondere der Durchfluss- und/oder Temperaturmesstechnik, ist im Montagezustand durch die Öffnung 17 des Gelenkkopfs 4 geführt und dadurch in dem Gelenkkopf 4 zumindest axial geführt. Das Einsteckgerät weist dazu eine komplementäre Gestalt und Größe komplementär zu der Öffnung 17 an einer vorgegebenen Stelle des Einsteckgeräts auf, insbesondere einen entsprechenden Außendurchmesser. Weist das Einsteckgerät weiterhin z.B. eine Schulter oder eine anders geartete Verdickung auf, z.B. eine Feststellmutter zum Verschrauben des Einsteckgeräts mit dem Stutzen, welche im Montagezustand zwischen Gelenkkopf und Behälter oder Rohr angeordnet ist, so bildet der Gelenkkopf 4 einen radialen Anschlag. Über den Gelenkkopf 4 kann somit eine Kraft auf das Einsteckgerät in Richtung des Behälters oder des Rohrs ausgeübt werden. Auch denkbar ist, dass auf dem Schlitten ein separater Anschlag angeordnet ist und der Gelenkkopf lediglich zur axialen Führung des Einsteckgeräts vorgesehen ist. Alternativ dazu ist das Einsteckgerät zwischen die Spannbacken 10 und 11 des Gelenkkopfs 4 eingespannt.

Wie der Gelenkkopf, so ist auch der Halter 7 in diesem Beispiel zweigeteilt. Er weist einen dritte Spannbacke18 und eine vierte Spanbacke 19 auf. Die dritte und vierte Spannbacke 18 und 19 definieren analog zur ersten und zweiten Spannbacke eine Öffnung zur Aufnahme des Stutzens, um die Linearführung an diesem fest zu spannen. Der Halter 7 ist somit lösbar am Behälter oder Rohr indirekt anbringbar. Bei anderen Ausgestaltungen der Erfindung ist die Linearführung über den Halter auch direkt an dem Behälter oder der Rohrleitung anbringbar.

Ein erfindungsgemäßes System zum Einführen des Einsteckgeräts, insbesondere ein Durchflussmessgerät oder ein Temperaturmessgerät, in den Behälter oder die Rohrleitung durch eine Öffnung des Behälters oder der Rohrleitung umfasst somit eine erfindungsgemäße Wechselarmatur, den Behälter und das Einsteckgerät. Die Linearführung weist einen Halter auf, welcher so ausgestaltet ist, dass die Linearführung an einem am Behälter angebrachten und komplementär zum Halter der Linearführung ausgestalteten Stutzen, insbesondere auf einer Stutzenaußenseite, lösbar anbringbar ist. Das Einsteckgerät ist dann durch den Stutzen in den Behälter oder die Rohrleitung einführbar. Der Stutzen begrenzt dabei die Öffnung des Behälters oder des Rohrs der Rohrleitung. Der Gelenkkopf weist eine Spannvorrichtung auf, welche so ausgestaltet ist, dass das Einsteckgerät an einer vorgegebenen Stelle des Einsteckgeräts in den Gelenkkopf einspannbar ist. Des Weiteren kann der Stutzen als Ventil ausgestaltet sein, z.B. als Kugelhahn. Im Innern des Behälters oder der Rohrleitung kann sich ein Medium, z.B. ein Gas, mit einem Druck größer dem Umgebungsdruck außerhalb des Behälters oder der Rohrleitung befinden. Durch das Schließen des Ventils ist ein Austreten des Mediums aus dem Behälter oder der Rohrleitung durch die Öffnung, respektive durch den Stutzen, zu verhindern. Auch zwischen dem Stutzen und dem Behälter oder der Rohrleitung kann ein Ventil, z.B. ein Kugelhahn, angeordnet sein.

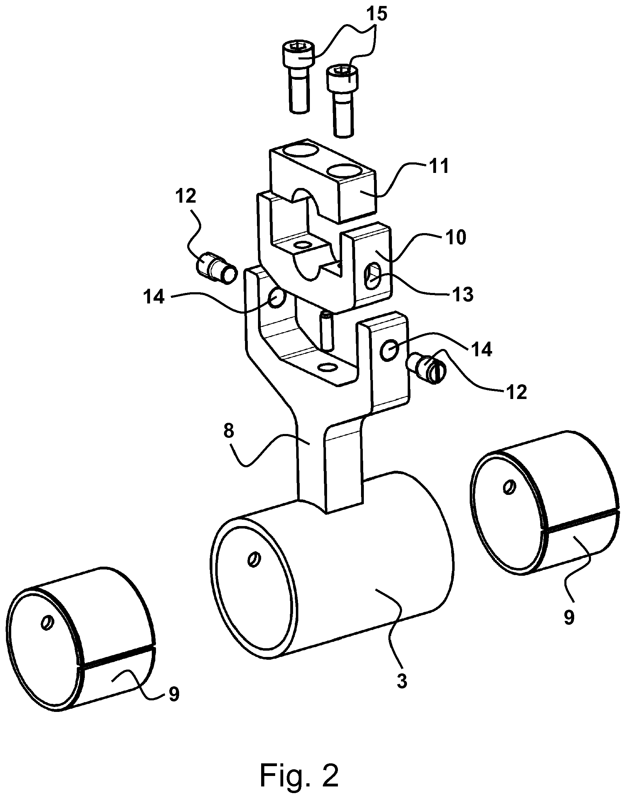

Fig. 2 zeigt eine weitere Explosionsdarstellung, hier den Schlitten 3 mit Gabel 8 und Gelenkkopf 4 der erfindungsgemäßen Wechselarmatur aus Fig. 1. Wie in Fig. 1 bereits ausgeführt, ist der Gelenkkopf 4, bestehend aus der ersten Spannbacke 10 und der zweiten Spannbacke 11, in einer Gabel 8 gelagert. Dazu weist der Gelenkkopf 4, hier die erste Spanbacke 10, eine Nut 13 auf, mit einer Breite, welche geringfügig größer ist, als der Außendurchmesser eines Stifts 12, welcher Stift 12 in der Nut 13 im montierten Zustand der Wechselarmatur geführt ist, und einer Länge, welche deutlich größer ist als der Außendurchmesser des Stifts 12. Dadurch ist der Gelenkkopf 4 in Längsrichtung der Nut 13 frei beweglich und in den Grenzen, welche die Paarung Stift und Nut vorgibt, verschiebbar. Steht die Längsrichtung der Nut 13 senkrecht auf der Linearführung, hier dann auch parallel zur Hochachse der Gabel 8, weist der Gelenkkopf 4 einen Freiheitsgrad in diese Richtung auf, entlang derer er durch Aufbringen einer sehr geringen Kraft, welche in diese Richtung zeigt, beweglich ist, insbesondere um eine Ausgleichsbewegung auszuführen. Der Gelenkkopf 4 wäre in der beschriebenen Ausgestaltung ohne weitere Einschränkungen auch drehbar um die Längsachse des Stifts 12 gelagert. Durch einen weiteren Anschlag ist hier der Gelenkkopf 4 jedoch nur um einen vorgegebenen Winkel um die Längsachse des Stifts 12 drehbar. Somit ist der Gelenkkopf auf dem Schlitten drehbar um zumindest eine erste Drehachse senkrecht zur Linearführung gelagert und er weist einen weiteren, dritten Freiheitsgrad auf. Der Anschlag kann beispielsweise gebildet werden durch eine weitere Nut-Stift-Verbindung in der Gabel, z.B. parallel zur oder entlang der Hochachse der Gabel, oder der Anschlag wird gebildet durch die geometrischen Abmessungen der Gabel 8 und des Gelenkkopfs 4. Weist der Gelenkkopf 4 eine vorgegeben breite Fläche senkrecht zur genannten Drehachse auf und die Gabel 8 weist eine dieser Fläche gegenüberliegende Fläche auf, wobei beide Flächen einen vorgegebenen maximalen Abstand zueinander aufweisen, welcher sich durch die maximale Auslenkung des Gelenkkopfs 4 in Richtung des Freiheitsgrads ergibt, welcher durch die Nut 13 und den Stift 12 begrenzt ist, so liegt durch Verkippen der genannten Fläche des Gelenkkopfs gegenüber der genannten Fläche der Gabel bei einem vorgegebenen Winkel, der Flächenrand der Fläche des Gelenkkopfs auf der genannten Fläche der Gabel auf. Dadurch wird ein Verdrehen des Gelenkkopfs über diesen vorgegebenen Winkel hinaus verhindert.

Ist in diesem Ausführungsbeispiel der Erfindung die Gabel 8 um ihre Hochachse drehbar auf dem Schlitten 3 gelagert, dann weist der Gelenkkopf 4 einen weiteren, vierten Freiheitsgrad auf. Er ist dann drehbar um eine zweite Achse, welche senkrecht auf die Linearführung steht und welche senkrecht zur ersten Achse steht, um welche der Gelenkkopf 4 drehbar in der Gabel 8 gelagert ist.

Ist der Gelenkkopf 4 um die erste Drehachse verdreht, weist die Längsachse der Nut 13 also einen Winkel ungleich 90° zur Linearführung auf, ist der Gelenkkopf 4 in Richtung der Längsachse der Nut 13 verschiebbar, dann steht eine Richtungskomponente einer möglichen Bewegungsrichtung des Gelenkkopfs senkrecht auf der Linearführung. Der Betrag dieser Richtungskomponente hängt vom Winkel der Verdrehung des Gelenkkopfs 4 ab. Der maximale Winkel, welcher der Gelenkkopf um eine Achse senkrecht zur Linearführung verdreh bar gelagert ist, beträgt weniger als 90°.

Die Nut 13 weist eine ausreichende Tiefe auf, damit der Stift 12 nicht bis zum Nutgrund reicht, zur Begrenzung der Reibungskräfte einerseits und zur Gewährleistung der Bewegungsfreiheit des Gelenkkopfs 4 in Richtung senkrecht zur Linearführung und senkrecht zur Hochachse des Gabel 8. Der Gelenkkopf 4 weist zumindest auf einer Seite des Gelenkkopfs einen vorgegebenen Abstand zur Gabel 8, hier einem Zinken Gabel 8 auf, selbst wenn der Gelenkkopf 4 die Gabel 8 auf der, der ersten Seite gegenüberliegenden Seite des Gelenkkopfs 4 berührt. Dieser Abstand repräsentiert die Strecke, auf welcher der Gelenkkopf 4 entlang des Stifts 12 verschiebbar ist. Hier sind zwei Stifte 12 durch zwei Bohrungen 14 auf einer Linie in den Zinken der Gabel 8 geführt und befestigt, welche Linie gleichzeitig die erste Drehachse bildet.

Zusammenfassend ist der Gelenkkopf 4 auf dem Schlitten 3 hier so gelagert ist, dass er drei Freiheitsgrade aufweist, zwei translatorisch entlang zweier Achsen senkrecht zur Linearführung und sich selbst und zumindest einen rotatorisch um eine der beiden Achsen seiner translatorischen Bewegungsfreiheit in jeweils vorgegebenem Maße, d.h. begrenzte Strecke oder Winkel.

Der Schlitten 3 wird über die Linearführung geschoben und dort an der Gewindemutter befestigt. Um die Reibung zwischen Schlitten 3 und Lienarführung zu verringern, sind zwischen Schlitten 3 und Linearführung zusätzlich Gleitbuchsen 9 angebracht.

### Bezugszeichenliste

- 1: Wechselarmatur
- 2: Linearführung
- 3: Schlitten
- 4: Gelenkkopf
- 5: Gewindemutter
- 6: Sechskant
- 7: Halter
- 8: Gabel
- 9: Gleitbuchsen
- 10: Erste Spannbacke
- 11: Zweite Spannbacke
- 12: Stift
- 13: Nut
- 14: Bohrung
- 15: Spannschrauben
- 16: Verbindungsschrauben
- 17: Öffnung für das Einsteckgerät
- 18: Dritte Spannbacke
- 19: Vierte Spannbacke

## Patentansprüche

1. Wechselarmatur (1) zum Einführen eines Einsteckgeräts der Prozess-Messtechnik in einen Behälter durch eine Behälteröffnung, mit einer Linearführung (2), welche über einen Halter am Behälter lösbar anbringbar ist, mit einem entlang der Linearführung geführten Schlitten (3), auf welchem Schlitten ein Gelenkkopf (4) so gelagert ist, dass er zumindest einen ersten translatorischen Bewegungsspielraum senkrecht zur Längsachse der Linearführung aufweist, entlang dessen er beweglich ist, und dass er zumindest einen ersten rotatorischen Bewegungsspielraum um eine erste Drehachse senkrecht zur Längsachse der Linearführung und senkrecht zum ersten translatorischen Bewegungsspielraum aufweist, um welche er drehbar ist, wobei das Einsteckgerät im Montagezustand in dem Gelenkkopf geführt ist, wobei auf dem Schlitten (3) eine Gabel (8) befestigt ist, welche Gabel eine senkrecht zur Längsachse der Linearführung ausgerichtete Hochachse aufweist und an welcher Gabel ein Stift (12) senkrecht zur Längsachse der Linearführung und senkrecht zur Hochachse der Gabel angeordnet ist, welcher Stift in einer abgesetzten Nut (13) des Gelenkkopfs gelagert ist und die Bewegung des Gelenkkopfs längs der Nut begrenzt, wobei die Gabel die Bewegung des Gelenkkopfs längs des Stifts begrenzt,
wobei der erste translatorische Bewegungsspielraum parallel zur Hochachse ist.

2. Wechselarmatur nach Anspruch 1,
**dadurch gekennzeichnet,**
**dass** die Linearführung (2) eine um ihre Längsachse drehbar gelagerte Spindel aufweist, welche mit dem Schlitten ein Getriebe bildet, welches eine rotatorische Bewegung der Spindel in eine translatorische Bewegung des Schlittens (3) umwandelt.

3. Wechselarmatur nach Anspruch 2,
**dadurch gekennzeichnet,**
**dass** die Spindel zwei Stirnseiten aufweist, welche jeweils eine Kupplung zur Übertragung eines Drehmoments um die Längsachse der Spindel auf die Spindel aufweist.

4. Wechselarmatur nach einem der Ansprüche 1 bis 3,
**dadurch gekennzeichnet,**
**dass** der Gelenkkopf (4) auf dem Schlitten (3) so gelagert ist, dass er einen zweiten translatorischen Bewegungsspielraum senkrecht zur Längsachse der Linearführung und senkrecht zum ersten translatorischen Bewegungsspielraum aufweist, entlang dessen er beweglich ist.

5. Wechselarmatur nach einem der Ansprüche 1 bis 4,
**dadurch gekennzeichnet,**
**dass** der Gelenkkopf (4) auf dem Schlitten (3) drehbar um eine zweite Drehachse senkrecht zur Linearführung und senkrecht zur ersten Drehachse gelagert ist.

6. System zum Einführen eines Einsteckgeräts der Prozess-Messtechnik in einen Behälter durch eine Behälteröffnung, umfassend eine Wechselarmatur (1) nach einem der Ansprüche 1 bis 6, den Behälter und das Einsteckgerät,
**dadurch gekennzeichnet,**
**dass** die Linearführung einen Halter (7) aufweist, welcher so ausgestaltet ist, dass die Linearführung an einem am Behälter angebrachten und komplementär zum Halter der Linearführung ausgestalteten Stutzen lösbar anbringbar ist.

7. System nach Anspruch 6,
**dadurch gekennzeichnet,**
**dass** der Stutzen ein Ventil zum Öffnen und Schließen der Behälteröffnung aufweist.

8. System nach Anspruch 6 oder 7,
**dadurch gekennzeichnet,**
**dass** der Gelenkkopf (4) eine Spannvorrichtung aufweist, welche so ausgestaltet ist, dass das Einsteckgerät an einer vorgegebenen Stelle des Einsteckgeräts in den Gelenkkopf einspannbar ist.

9. System nach einem der Ansprüche 6 bis 8,
**dadurch gekennzeichnet,**
**dass** das Einsteckgerät ein Durchflussmessgerät oder ein Temperaturmessgerät ist.

## Claims

1. Retractable assembly (1) for introducing an insertion device used in process measuring technology into a container via a container opening, with a linear guide (2), which can be fitted on the container in a detachable manner via a mount, with a slide (3) guided along the linear guide, wherein a swivel head (4) is mounted on said slide in such a way that it features at least a first translational range of movement perpendicular to the longitudinal axis of the linear guide along which it can be moved, and in such a way that it features at least a first rotational range of movement around a first axis of rotation perpendicular to the longitudinal axis of the linear guide and perpendicular to the first translational range of movement around which it can be rotated, wherein, in the installed state, the insertion device is guided into the swivel head,
wherein a fork (8) is secured on the slide (3), said fork having a vertical axis which is aligned perpendicular to the longitudinal axis of the linear guide and wherein a pin (12) is arranged on said fork in a manner perpendicular to the longitudinal axis of the linear guide and perpendicular to the vertical axis of the fork, wherein said pin is mounted in a groove (13) of the swivel head and limits the movement of the swivel head along the groove, wherein the fork limits the movement of the swivel head along the pin,
wherein the first translational range of movement is parallel to the vertical axis.

2. Retractable assembly as claimed in Claim 1,
**characterized in that**
the linear guide (2) has a spindle that is pivot mounted around its longitudinal axis, said spindle forming a transmission with the slide that converts a rotational motion of the spindle into a translational motion of the slide (3).

3. Retractable assembly as claimed in Claim 2,
**characterized in that**
the spindle has two front faces, each featuring a coupling for the transfer of a torque around the longitudinal axis of the spindle to the spindle.

4. Retractable assembly as claimed in one of the Claims 1 to 3,
**characterized in that**
the swivel head (4) is mounted on the slide (3) in such a way that it presents a second translational range of movement perpendicular to the longitudinal axis of the linear guide and perpendicular to the first translational range of movement along which it can be moved.

5. Retractable assembly as claimed in one of the Claims 1 to 4,
**characterized in that**
the swivel head (4) is arranged on the slide (3) in a manner that it is pivot-mounted around a second axis of rotation perpendicular to the linear guide and perpendicular to the first axis of rotation.

6. System designed for the introduction of an insertion device used in process measuring technology into a container through a container opening, comprising a retractable assembly (1) as claimed in one of the Claims 1 to 6, the container and the insertion device
**characterized in that**
the linear guide has a mount (7), which is designed in such a way that the linear guide can be fitted in a detachable manner on a nozzle which is fixed on the container and designed in a complementary manner to the mount of the linear guide.

7. System as claimed in Claim 6,
**characterized in that**
the nozzle has a valve to open and close the container opening.

8. System as claimed in Claim 6 or 7,
**characterized in that**
the swivel head (4) has a clamping unit which is designed in such a way that the insertion device can be clamped into the swivel head at a predetermined position of the swivel head.

9. System as claimed in one of the Claims 6 to 8,
**characterized in that**
the insertion device is a flowmeter or a temperature measuring device.

## Revendications

1. Sonde rétractable (1) destinée à l'introduction d'un appareil enfichable de la technique de mesure de process dans un réservoir à travers une ouverture de réservoir, avec un guide linéaire (2), lequel peut être fixé de manière amovible au réservoir par le biais d'un support, avec un chariot (3) guidé le long du guide linéaire, chariot sur lequel est montée une tête articulée (4) de telle manière à ce qu'elle présente au moins un premier jeu de translation perpendiculaire à l'axe longitudinal du guide linéaire, le long duquel elle est mobile, et de telle manière à ce qu'elle présente au moins un premier jeu de rotation autour d'un premier axe de rotation perpendiculaire à l'axe longitudinal du guide linéaire et perpendiculaire au premier jeu de translation, autour duquel elle est mobile, l'appareil enfichable étant introduit, à l'état monté, dans la tête articulée,
une fourche (8) étant fixée sur le chariot, laquelle fourche présente un axe vertical aligné perpendiculairement à l'axe longitudinal du guide linéaire et sur laquelle fourche une broche (12) est disposée perpendiculairement à l'axe longitudinal du guide linéaire et perpendiculairement à l'axe vertical de la fourche, laquelle broche est montée dans une rainure étagée (13) de la tête d'articulation et limite le mouvement de la tête d'articulation le long de la rainure, la fourche limitant le mouvement de la tête d'articulation le long de la broche,
le premier jeu de translation étant parallèle à l'axe vertical.

2. Sonde rétractable selon la revendication 1,
**caractérisé**
**en ce que** le guide linéaire (2) comporte une broche montée de manière à pouvoir tourner autour de son axe longitudinal, qui forme avec le chariot un mécanisme qui convertit un mouvement de rotation de la broche en un mouvement de translation du chariot (3).

3. Sonde rétractable selon la revendication 2,
**caractérisé**
**en ce que** la broche comporte deux faces frontales, dont chacune comporte un accouplement destiné à transmettre à la broche un couple autour de l'axe longitudinal de la broche.

4. Sonde rétractable selon la revendication 1 à 3,
**caractérisé**
**en ce que** la tête articulée (4) est logée sur le chariot (3) de manière à présenter un deuxième jeu de translation perpendiculaire à l'axe longitudinal du guide linéaire et perpendiculaire au premier jeu de translation le long duquel elle est mobile.

5. Sonde rétractable selon la revendication 1 à 4,
**caractérisé**
**en ce que** la tête d'articulation (4) est montée sur le chariot (3) de manière à pouvoir tourner autour d'un deuxième axe de rotation perpendiculaire au guide linéaire et perpendiculaire au premier axe de rotation.

6. Système destiné à l'introduction d'un appareil enfichable de la technique de mesure de process dans un réservoir à travers une ouverture de réservoir, comprenant une sonde rétractable (1) selon l'une des revendications 1 à 6, le réservoir et l'appareil enfichable
**caractérisé**
**en ce que** le guide linéaire présente un support (7), lequel est conçu de telle sorte que le guide linéaire peut être fixé de manière amovible à un piquage fixé au réservoir et conçu pour être complémentaire au support du guide linéaire.

7. Système selon la revendication 6,
**caractérisé**
**en ce que** le piquage comporte une vanne permettant d'ouvrir et de fermer l'ouverture du réservoir.

8. Système selon la revendication 6 ou 7,
**caractérisé**
**en ce que** la tête articulée (4) présente un dispositif de serrage, lequel est conçu de telle manière que l'appareil enfichable peut être serré dans la tête d'articulation à une position prédéterminée de l'appareil enfichable.

9. Système selon l'une des revendications 6 à 8,
**caractérisé**
**en ce que** l'appareil enfichable est un débitmètre ou un transmetteur de température.
